# EUROPEAN PATENT SPECIFICATION

(11) **EP 2 192 322 B1**
(45) Date of publication and mention of the grant of the patent: **31.07.2019**
(21) Application number: 08838249.4
(22) Date of filing: 01.10.2008
(51) Int. Cl.: F16F 7/12

(54) **SHOCK ABSORBING MEMBER**
STOSSDÄMPFUNGSELEMENT
ÉLÉMENT ABSORBANT LES CHOCS

(30) Priority: 09.10.2007 JP 2007263400
(43) Date of publication of application: 02.06.2010
(73) Proprietor: Mitsubishi Heavy Industries, Ltd., Tokyo 108-8215 (JP)
(72) Inventor: KANEMASU, Masayuki, Nagoya-shi Aichi 455-8515 (JP); NISHIYAMA, Shigeru, Nagoya-shi Aichi 455-8515 (JP); TANAKA, Atsumi, Nagoya-shi Aichi 455-8515 (JP)
(74) Representative: Henkel, Breuer & Partner
(86) International application number: PCT/JP2008/067790
(87) International publication number: WO 2009/048005

(56) References cited:
- EP-A1- 1 818 561
- WO-A1-01/60675
- JP-A- 7 217 689
- JP-A- 7 224 874
- JP-A- 10 123 009
- JP-A- H07 217 689
- JP-B2- 3 360 871
- US-A- 5 649 455

## Description

### Technical Field

The present invention relates to an impact-absorbing member and, for example, to an impact-absorbing member suitable for use in flying objects such as aircraft and driving objects such as automobiles.

### Background Art

A known example of an impact-absorbing member that is used in flying objects (traveling objects) such as aircraft and driving objects (traveling objects) such as automobiles and that has an impact-absorbing ability to alleviate an excessive initial rise in reaction force occurring during transition to a fracture mode is the energy-absorbing member disclosed in Patent Document 1.

Patent Document 2 discloses an impact-absorbing composite structure that can control the progress of destruction while absorbing the impact by self-destruction, the impact-absorbing composite structure being formed with a resin and a fiber-laminated body and comprising an interlayer reinforcing area obtained by applying needling, stitching or a three-dimensional fabric to the impact-absorbing composite structure. In order to be able to absorb the impact effectively at the initial start of the self-destruction process, the needling, stitching or three-dimensional fabric is not applied from the end portion of the impact-absorbing composite structure up to a predetermined position.

Patent Document 3 discloses a cylindrical energy-absorbing member comprising a plurality of fiber-reinforcing layers and a plurality of separation assistant layers, the latter being embedded between the fiber-reinforced layers into one end part in the longitudinal direction of the energy-absorbing member. When shock energy is applied to the energy-absorbing member, interlayer separation is easily caused in the respective fiber-reinforcing layers to surely advance destruction from this portion.
Patent Document 1: Japanese Patent No. 3360871
Patent Document 2: European Patent Application Publication No. EP 1 818 561 A1
Patent Document 3: Japanese Patent Application Publication No. JP H07-217689 A

### Disclosure of Invention

For the energy-absorbing member disclosed in Patent Document 1 above, however, reinforcing fibers in fiber-reinforced resin layers at the center in the thickness direction extend in a direction falling within the range of 90°±15° with respect to an energy-absorption axis direction. Therefore, if a load is applied to the energy-absorbing member in the axial direction thereof, a fracture proceeds easily in the axial direction in the fiber-reinforced resin layers themselves at the center in the thickness direction, as well as between these fiber-reinforced resin layers and fiber-reinforced resin layers disposed adjacent thereto, and the load received by the energy-absorbing member as the self-fracture proceeds is significantly decreased, thus resulting in the problem of a significantly decreased amount of absorbed energy.

An object of the present invention, which has been made in light of the above circumstances, is to provide an impact-absorbing member that allows control of the peak value of an initial load in a self-fracture occurring during transition to a stable sequential fracture mode and that can ensure a desired amount of absorbed energy.

To solve the above problem, the present invention employs the following solutions. The invention is defined by the claims.

In a first aspect, the invention thus relates to an impact-absorbing member as defined in claim 1 . The impact-absorbing member includes a main body including a plurality of fiber-reinforced resin layers that absorb an impact through self-fracture when subjected to the impact, and a leading portion including a plurality of fiber-reinforced resin layers that absorb the impact through self-fracture when subjected to the impact, the leading portion fracturing initially when subjected to the impact. In the impact-absorbing member, at least one of the fiber-reinforced resin layers of the leading portion has reinforced fibers oriented at an angular difference of 10° or more with respect to an energy-absorption axis direction. The main body has a higher strength and elastic modulus in the energy-absorption axis direction than the leading portion, and at least one of the fiber-reinforced resin layers of the main body and at least one of the fiber-reinforced resin layers of the leading portion is the same fiber-reinforced resin layer. The fiber-reinforced resin layers of the main body and the fiber-reinforced resin layers of the leading portion which are included in the same fiber-reinforced resin layer have the reinforcing fibers in the fiber-reinforced resin layers of the main body oriented at an angle within a range of 0°±45° with respect to the energy-absorption axis direction, and have the reinforcing fibers in the fiber-reinforced resin layers of the leading portion (3a) oriented at an angle within a range of 90°±45° with respect to the energy-absorption axis direction.

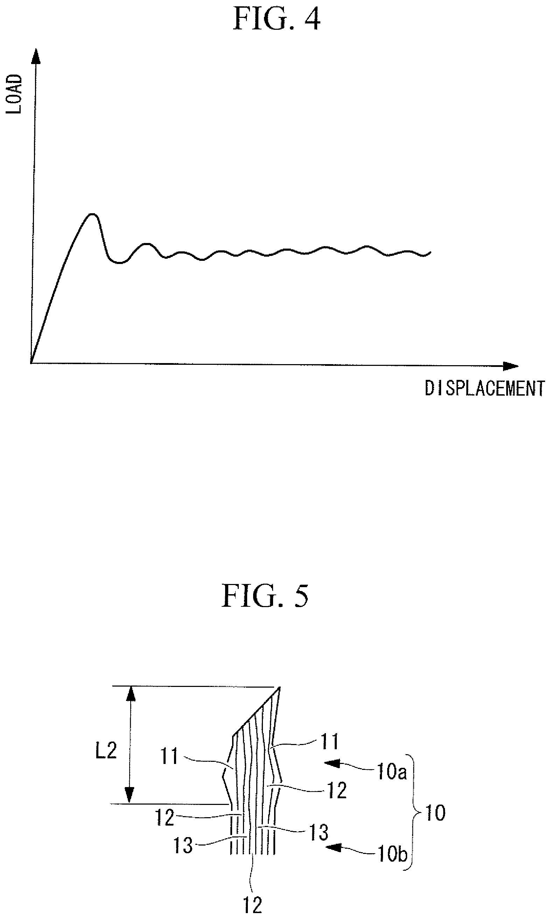

When a load inducing an initial fracture is applied to the impact-absorbing member of the present invention in the energy-absorption axis direction, the leading portion, which has a lower strength in the axial direction than the main body, fractures earlier in the initial stage of self-fracture, and the main body then fractures in the middle and terminal stages of self-fracture. That is, for example, as shown in Fig. 4, it is possible to control the peak value of the initial load occurring in the impact-absorbing member during transition to a stable sequential fracture mode. In other words, it is possible to eliminate a harmful peak value of the initial load occurring in the initial stage of self-fracture and to maintain the impact load in the middle and terminal stages of self-fracture for a predetermined period of time so that the fracture proceeds at a predetermined load (for example, near the average load).

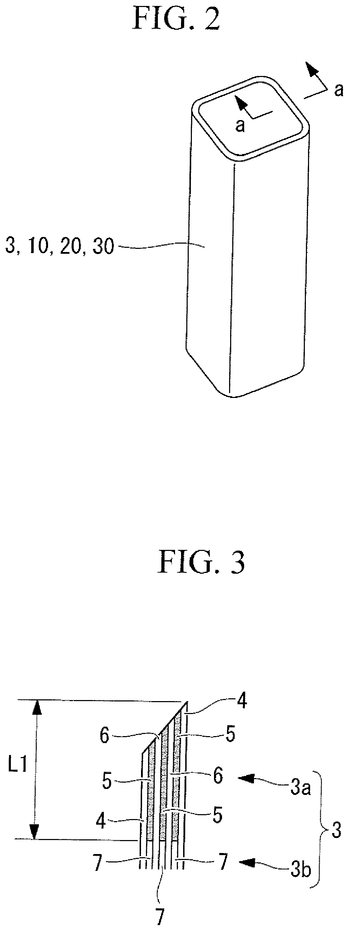

In addition, the peak value of the initial load on the impact-absorbing member of the invention and the value of the predetermined load at which a self-fracture proceeds can be freely set to desired values by changing the composition of the fiber-reinforced resin composite constituting the impact-absorbing member (that is, the materials of the reinforcing fibers and the resin), by providing the leading portion at one or the other end, or both ends, of the impact-absorbing member, or by adjusting the length L1, L2 or L3 (see Figs. 3, 5 and 6) of the leading portion.

In addition, the peak value of the initial load and the value of the predetermined load at which a self-fracture proceeds can be more finely set by orienting the reinforcing fibers in at least one of the fiber-reinforced resin layers at the leading portion within the range of 90°±45° with respect to the energy-absorption axis direction and orienting the reinforcing fibers in the same fiber-reinforced resin layer in the main body within the range of 0°±45° with respect to the energy-absorption axis direction, thus further extending the design flexibility of the impact-absorbing member.

The leading portion may be formed by gradually applying a load crushing the portion in a direction of an energy-absorption axis and stopping the crushing by the load when displacement of the fiber-reinforced resin layers reaches a desired value.

The reinforcing fibers of the leading portion may meander locally so as to protrude inward or outward with respect to a circumferential direction, or may meander locally inward with respect to the circumferential direction.

In a second aspect, the invention relates to a crashworthy structural member as defined in claim 4. The crashworthy structural member includes the impact-absorbing member according to the first aspect, which can eliminate a harmful peak value of the initial load occurring in the initial stage of self-fracture and which can maintain the impact load in the middle and terminal stages of self-fracture for a predetermined period of time so that the fracture proceeds at a predetermined load (for example, near the average load). Examples of such a crashworthy structural member include floor structures of flying objects, such as helicopters and aircraft, and land-driven objects.

For the crashworthy structural member of the present invention, an impact due to a collision or crash is absorbed by the impact-absorbing member, which has superior impact-energy absorbing capability, so that it can ensure a good chance of the occupants surviving even if an unforeseen impact is encountered in the event of, for example, a collision or crash.

In a third aspect, the invention relates to a traveling object as defined in claim 5. The traveling object includes the crashworthy structural member according to the second aspect, which can eliminate a harmful peak value of the initial load occurring in the initial stage of self-fracture and which can maintain the impact load in the middle and terminal stages of self-fracture for a predetermined period of time so that the fracture proceeds at a predetermined load (for example, near the average load).

For the traveling object of the present invention, an impact due to a collision or crash is absorbed by the crashworthy structural member, which has superior impact-energy absorbing capability, so that it can ensure a good chance of the occupants surviving even if an unforeseen impact is encountered in the event of, for example, a collision or crash.

The present invention provides an advantage in that it allows control of the peak value of an initial load in a self-fracture occurring during transition to a stable sequential fracture mode and can ensure a desired amount of absorbed energy.

### Brief Description of Drawings

Fig. 1 is a perspective view showing the fuselage frame structure of a helicopter including an impact-absorbing member according to the present invention.
Fig. 2 is a schematic overall perspective view of the impact-absorbing member of the present invention.
Fig. 3 is a sectional view taken along arrow a-a of Fig. 2.
Fig. 4 is a graph showing the relationship between the impact load imposed on the impact-absorbing member of the present invention and the displacement thereof.
Fig. 5 is a diagram, similar to Fig. 3, showing a first reference impact-absorbing member.
Fig. 6 is a diagram, similar to Figs. 3 and 5, showing a second reference impact-absorbing member.
Fig. 7 is a diagram, similar to Figs. 3, 5, and 6, showing a third reference impact-absorbing member.
Fig. 8 is a flowchart illustrating a method for producing the third reference impact-absorbing member.

### Explanation of Reference Signs:

- 1:: helicopter
- 2:: floor structure
- 3:: impact-absorbing member
- 3a:: leading portion
- 3b:: main body (impact-absorbing-member main body)
- 4:: +45° fiber-reinforced resin layer
- 5:: 90° fiber-reinforced resin layer
- 6:: -45° fiber-reinforced resin layer
- 7:: 0° fiber-reinforced resin layer
- 10:: impact-absorbing member
- 10a:: leading portion (fracture portion)
- 20:: impact-absorbing member
- 20a:: leading portion (meandering portion)
- 30:: impact-absorbing member
- 30a:: leading portion (release portion)

### Best Mode for Carrying Out the Invention

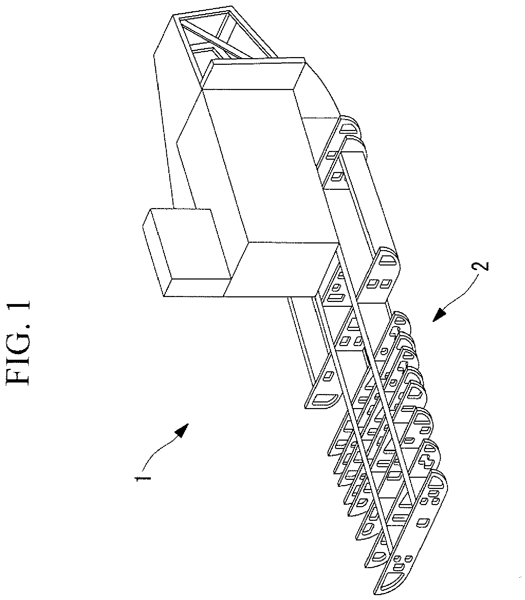

A first embodiment of the impact-absorbing member of the present invention will be described below with reference to Figs. 1 to 4.

Fig. 1 is a perspective view showing the fuselage frame structure of a helicopter including the impact-absorbing member of the present invention, Fig. 2 is a schematic overall perspective view of the impact-absorbing member of the present invention, Fig. 3 is a sectional view taken along arrow a-a of Fig. 2, and Fig. 4 is a graph showing the relationship between the impact load imposed on the impact-absorbing member of the present invention and the displacement thereof.

The impact-absorbing member (also referred to as "impact-absorbing tube") of the present invention can be applied to, for example, a floor structure 2 of a helicopter (rotorcraft) 1, as shown in Fig. 1.

The impact-absorbing member 3 has an external appearance like, for example, a hollow rectangular column (square column in this embodiment), as shown in Fig. 2, and is formed of, for example, a fiber-reinforced resin composite prepared by laminating a required number of (in this embodiment, seven) sheet-shaped prepregs formed by impregnating reinforcing fiber (reinforcing fiber formed of, for example, carbon fiber, glass fiber, aramid fiber (e.g., Kevlar (registered trademark)), ceramic fiber, aromatic polyamide fiber, alumina fiber, silicon carbide fiber, or boron fiber) in advance with a resin (such as epoxy resin, polyester resin, cyanate ester resin, or polyimide resin), followed by molding them under pressure in a heating furnace (autoclave) (not shown).

The impact-absorbing member 3 includes a leading portion (also referred to as "initiator portion", which means a portion serving as the origin of fracture) 3a constituting an end (one end (top end) and/or the other end (bottom end)) in an energy-absorption axis direction (hereinafter referred to as "axial direction") and an impact-absorbing-member main body (hereinafter referred to as "main body") 3b constituting the other portion.

As shown in Fig. 2, the leading portion 3a is provided in the circumferential direction over a length L1 (for example, 5 to 10 mm) from a leading (terminal) end (leading surface if chamfering (45° taper cutting: chamfer cutting), as shown in Fig. 3, is not performed) of the impact-absorbing member 3 toward the main body 3b (toward the center of the main body 3b) .

The fiber-reinforced resin composite constituting the leading portion 3a is prepared by, for example, as shown in Fig. 3, sequentially laminating a +45° fiber-reinforced resin layer 4 whose reinforcing fibers (not shown) are oriented at an inclination of +45° with respect to the axial direction, a 90° fiber-reinforced resin layer 5 whose reinforcing fibers are oriented at an inclination of 90° (perpendicularly) with respect to the axial direction (vertical direction in Fig. 3), a -45° fiber-reinforced resin layer 6 whose reinforcing fibers are oriented at an inclination of -45° with respect to the axial direction, a 90° fiber-reinforced resin layer 5, a -45° fiber-reinforced resin layer 6, a 90° fiber-reinforced resin layer 5, and a +45° fiber-reinforced resin layer 4.

The fiber-reinforced resin composite constituting the main body 3b, on the other hand, is prepared by, for example, as shown in Fig. 3, sequentially laminating a +45° fiber-reinforced resin layer 4 whose reinforcing fibers are oriented at an inclination of +45° with respect to the axial direction (vertical direction in Fig. 3), a 0° fiber-reinforced resin layer 7 whose reinforcing fibers are oriented in the axial direction (that is, oriented without inclination with respect to the axial direction), a -45° fiber-reinforced resin layer 6 whose reinforcing fibers are oriented at an inclination of -45° with respect to the axial direction, a 0° fiber-reinforced resin layer 7, a -45° fiber-reinforced resin layer 6, a 0° fiber-reinforced resin layer 7, and a +45° fiber-reinforced resin layer 4.

When a load is applied to the impact-absorbing member 3 in the axial direction, the leading portion 3a, which has a lower strength in the axial direction than the main body 3b, fractures earlier in the initial stage of self-fracture, and the main body 3b then fractures in the middle and terminal stages of self-fracture. That is, as shown in Fig. 4, it is possible to control the peak value of the initial load occurring in the impact-absorbing member 3 during transition to a stable sequential fracture mode. In other words, it is possible to eliminate a harmful peak value of the initial load occurring in the initial stage of self-fracture and to maintain the impact load in the middle and terminal stages of self-fracture for a predetermined period of time so that the fracture proceeds at a predetermined load (for example, near the average load).

In addition, the peak value of the initial load on the impact-absorbing member 3 and the value of the predetermined load at which a self-fracture proceeds can be freely set to desired values by changing the composition of the fiber-reinforced resin composite constituting the impact-absorbing member 3 (that is, the materials of the reinforcing fibers and the resin), by providing the leading portion 3a at one or the other end, or both ends, of the impact-absorbing member 3, or by adjusting the length L1 of the leading portion 3a.

For example, a (crushing) fracture test carried out by applying a load to the impact-absorbing member 3 in the axial direction under dynamic conditions yielded test results showing that an impact-absorbing member 3 formed of a certain fiber-reinforced resin composite had a load homogeneity ratio (the initial peak load (kN) divided by the average load (kN)) of 0.84 to 0.87.

Also yielded were test results showing that an impact-absorbing member 3 formed of another fiber-reinforced resin composite had a load homogenity ratio of 0.76 to 1.04.

Although the leading portion 3a including the +45° fiber-reinforced resin layer 4, the 90° fiber-reinforced resin layer 5, the -45° fiber-reinforced resin layer 6, the 90° fiber-reinforced resin layer 5, the -45° fiber-reinforced resin layer 6, the 90° fiber-reinforced resin layer 5, and the +45° fiber-reinforced resin layer 4 has been described as a specific example, the present invention is not limited thereto. According to the invention, the 90° fiber-reinforced resin layers 5 are replaced with 90°±45° fiber-reinforced resin layers whose reinforcing fibers (not shown) are oriented at an inclination of +45° to +90° or -45° to -90° with respect to the axial direction, and can be replaced with 90°±15° fiber-reinforced resin layers, 90°±5° fiber-reinforced resin layers, or 90°±1° fiber-reinforced resin layers.

The fiber-reinforced resin layers that replace the 90° fiber-reinforced resin layers 5 are not limited to 90°±45° fiber-reinforced resin layers; any fiber-reinforced resin layers falling within the range of 90°±45° may be used.

This allows finer setting of the peak value of the initial load and the value of the predetermined load at which a self-fracture proceeds, thus further extending the design flexibility of the impact-absorbing member 3.

In addition, although the main body 3b including the +45° fiber-reinforced resin layer 4, the 0° fiber-reinforced resin layer 7, the -45° fiber-reinforced resin layer 6, the 0° fiber-reinforced resin layer 7, the -45° fiber-reinforced resin layer 6, the 0° fiber-reinforced resin layer 7, and the +45° fiber-reinforced resin layer 4 has been described as a specific example, the present invention is not limited thereto. According to the invention, the 0° fiber-reinforced resin layers 7 are replaced with 0°±45° fiber-reinforced resin layers whose reinforcing fibers (not shown) are oriented at an inclination of 0° to +45° or 0° to -45° with respect to the axial direction, and can be replaced with 0°±15° fiber-reinforced resin layers, 0°±5° fiber-reinforced resin layers, or 0°±1° fiber-reinforced resin layers.

The fiber-reinforced resin layers that replace the 0° fiber-reinforced resin layers 7 are not limited to 0°±45° fiber-reinforced resin layers; any fiber-reinforced resin layers falling within the range of 0°±45° can be used.

This allows finer setting of the peak value of the initial load and the value of the predetermined load at which a self-fracture proceeds, thus further extending the design flexibility of the impact-absorbing member 3.

A first reference impact-absorbing member will be described with reference to Figs. 2, 4, and 5.

Fig. 5 is a diagram, similar to Fig. 3, showing the first reference impact-absorbing member .

In Fig. 5, the same members as described above are denoted by the same reference signs.

The first reference impact-absorbing member 10 has an external appearance like, for example, a hollow rectangular column (square column in this case), as shown in Fig. 2, and is formed of, for example, a fiber-reinforced resin composite prepared by laminating a required number of (in this case, seven) sheet-shaped prepregs formed by impregnating reinforcing fiber (reinforcing fiber formed of, for example, carbon fiber, glass fiber, aramid fiber (e.g., Kevlar (registered trademark)), ceramic fiber, aromatic polyamide fiber, alumina fiber, silicon carbide fiber, or boron fiber) in advance with a resin (such as epoxy resin, polyester resin, cyanate ester resin, or polyimide resin), followed by molding them under pressure in a heating furnace (autoclave) (not shown).

The impact-absorbing member 10 includes a leading portion (also referred to as "initiator portion" or "fracture portion") 10a constituting an end (one end (top end) and/or the other end (bottom end)) in the axial direction and an impact-absorbing-member main body (hereinafter referred to as "main body") 10b constituting the other portion.

As shown in Fig. 5, the leading portion 10a is provided in the circumferential direction over a length L2 (for example, 2 to 5 mm) from a leading (terminal) end (leading surface if chamfering (45° taper cutting: chamfer cutting), as shown in Fig. 5, is not performed) of the impact-absorbing member 10 toward the main body 10b (toward the center of the main body 10b).

The fiber-reinforced resin composite constituting the impact-absorbing member 10 (that is, the leading portion 10a and the main body 10b) is prepared by, for example, as shown in Fig. 5, sequentially laminating a +45° fiber-reinforced resin layer 11 whose reinforcing fibers are oriented at an inclination of +45° with respect to the axial direction (vertical direction in Fig. 5), a 0° fiber-reinforced resin layer 12 whose reinforcing fibers are oriented in the axial direction (that is, oriented without inclination with respect to the axial direction), a -45° fiber-reinforced resin layer 13 whose reinforcing fibers are oriented at an inclination of -45° with respect to the axial direction, a 0° fiber-reinforced resin layer 12, a -45° fiber-reinforced resin layer 13, a 0° fiber-reinforced resin layer 12, and a +45° fiber-reinforced resin layer 11.

In addition, the leading portion 10a is a portion formed by, after curing the thermosetting resin, gradually applying a load inducing an initial fracture in the axial direction using a static tester (not shown) and stopping the static tester when the displacement thereof reaches a desired value within the range of 2 to 5 mm (if the leading portion 10a is provided at one or the other end) or 4 to 10 mm (if the leading portion 10a is provided at each end). Thus, a fractured portion (that is, a portion where the chamfer has been crushed and the layers have been delaminated (interlayer delamination)) is formed in the leading portion 10a.

When a load is applied to the impact-absorbing member 10 in the axial direction, the leading portion 10a, which has a lower strength in the axial direction than the main body 10b, fractures earlier in the initial stage of self-fracture, and the main body 10b then fractures in the middle and terminal stages of self-fracture. That is, as shown in Fig. 4, it is possible to control the peak value of the initial load occurring in the impact-absorbing member 10 during transition to a stable sequential fracture mode. In other words, it is possible to eliminate a harmful peak value of the initial load occurring in the initial stage of self-fracture and to maintain the impact load in the middle and terminal stages of self-fracture for a predetermined period of time so that the fracture proceeds at a predetermined load (for example, near the average load).

In addition, the peak value of the initial load on the impact-absorbing member 10 and the value of the predetermined load at which a self-fracture proceeds can be freely set to desired values by changing the composition of the fiber-reinforced resin composite constituting the impact-absorbing member 10 (that is, the materials of the reinforcing fibers and the resin), by providing the leading portion 10a at one or the other end, or both ends, of the impact-absorbing member 10, or by adjusting the length L2 of the leading portion 10a.

For example, a (crushing) fracture test carried out by applying a load to the impact-absorbing member 10 in the axial direction under dynamic conditions yielded test results showing that an impact-absorbing member 10 formed of a certain fiber-reinforced resin composite had a load homogeneity ratio (the initial peak load (kN) divided by the average load (kN)) of 1.16.

A second reference impact-absorbing member will be described with reference to Figs. 2, 4, and 6.

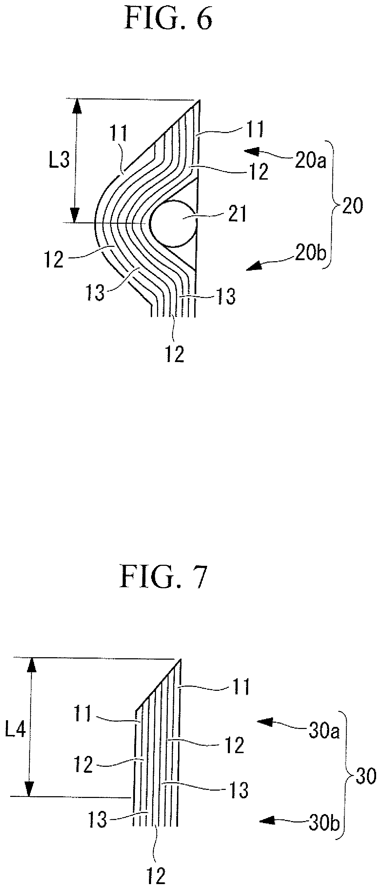

Fig. 6 is a diagram, similar to Figs. 3 and 5, showing the second reference impact-absorbing member.

In Fig. 6, the same members as described above are denoted by the same reference signs.

The second reference impact-absorbing member 20 has an external appearance like, for example, a hollow rectangular column (square column in this case), as shown in Fig. 2, and is formed of, for example, a fiber-reinforced resin composite prepared by laminating a required number of (in this case, seven) sheet-shaped prepregs formed by impregnating reinforcing fiber (reinforcing fiber formed of, for example, carbon fiber, glass fiber, aramid fiber (e.g., Kevlar (registered trademark)), ceramic fiber, aromatic polyamide fiber, alumina fiber, silicon carbide fiber, or boron fiber) in advance with a resin (such as epoxy resin, polyester resin, cyanate ester resin, or polyimide resin), followed by molding them under pressure in a heating furnace (autoclave) (not shown).

The impact-absorbing member 20 includes a leading portion (also referred to as "initiator portion" or "meandering portion") 20a constituting an end (one end (top end) and/or the other end (bottom end)) in the axial direction and an impact-absorbing-member main body (hereinafter referred to as "main body") 20b constituting the other portion.

As shown in Fig. 6, the leading portion 20a is provided in the circumferential direction such that an inner circumferential end of the leading portion 20a is located at a local position separated from a leading (terminal) end of the impact-absorbing member 20 toward the main body 20b (toward the center of the main body 20b) by a length L3 (for example, 2 mm) .

The fiber-reinforced resin composite constituting the impact-absorbing member 20 (that is, the leading portion 20a and the main body 20b) is prepared by, for example, as shown in Fig. 6, sequentially laminating a +45° fiber-reinforced resin layer 11 whose reinforcing fibers are oriented at an inclination of +45° with respect to the axial direction (vertical direction in Fig. 6), a 0° fiber-reinforced resin layer 12 whose reinforcing fibers are oriented in the axial direction (that is, oriented without inclination with respect to the axial direction), a -45° fiber-reinforced resin layer 13 whose reinforcing fibers are oriented at an inclination of -45° with respect to the axial direction, a 0° fiber-reinforced resin layer 12, a -45° fiber-reinforced resin layer 13, a 0° fiber-reinforced resin layer 12, and a +45° fiber-reinforced resin layer 11.

In addition, the leading portion 20a is a portion where axial meandering is locally formed by, before sequentially laminating the +45° fiber-reinforced resin layers 11, the 0° fiber-reinforced resin layers 12, and the -45° fiber-reinforced resin layers 13, placing a prepreg (in this embodiment, a strand-like prepreg with a diameter of 1 mm) 21 in the circumferential direction in advance, and then sequentially laminating the +45° fiber-reinforced resin layer 11, the 0° fiber-reinforced resin layer 12, the -45° fiber-reinforced resin layer 13, the 0° fiber-reinforced resin layer 12, the -45° fiber-reinforced resin layer 13, the 0° fiber-reinforced resin layer 12, and the +45° fiber-reinforced resin layer 11 on the exterior of (outside) the prepreg.

When a load is applied to the impact-absorbing member 20 in the axial direction, the leading portion 20a, which has a lower strength in the axial direction than the main body 20b, fractures earlier in the initial stage of self-fracture, and the main body 20b then fractures in the middle and terminal stages of self-fracture. That is, as shown in Fig. 4, it is possible to control the peak value of the initial load occurring in the impact-absorbing member 20 during transition to a stable sequential fracture mode. In other words, it is possible to eliminate a harmful peak value of the initial load occurring in the initial stage of self-fracture and to maintain the impact load in the middle and terminal stages of self-fracture for a predetermined period of time so that the fracture proceeds at a predetermined load (for example, near the average load).

In addition, the peak value of the initial load on the impact-absorbing member 20 and the value of the predetermined load at which a self-fracture proceeds can be freely set to desired values by changing the composition of the fiber-reinforced resin composite constituting the impact-absorbing member 20 (that is, the materials of the reinforcing fibers and the resin), by providing the leading portion 20a at one or the other end, or both ends, of the impact-absorbing member 20, or by adjusting the length L3 of the leading portion 20a.

For example, a (crushing) fracture test carried out by applying a load to the impact-absorbing member 20 in the axial direction under dynamic conditions yielded test results showing that an impact-absorbing member 20 formed of a certain fiber-reinforced resin composite had a load homogeneity ratio (the initial peak load (kN) divided by the average load (kN)) of 0.89.

A third reference impact-absorbing member will be described with reference to Figs. 2, 4, 7, and 8.

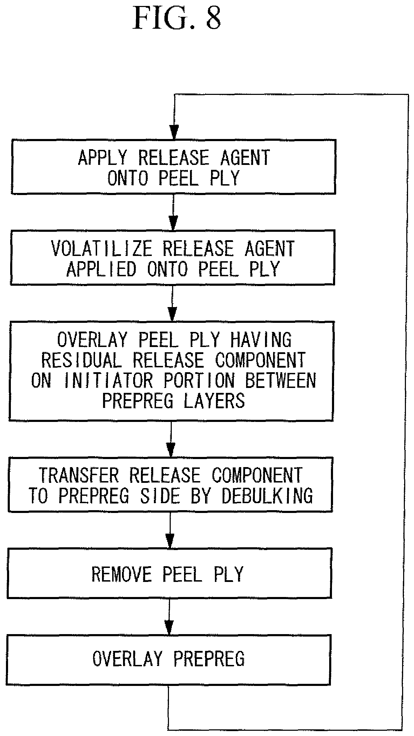

Fig. 7 is a diagram, similar to Figs. 3, 5, and 6, showing the third reference impact-absorbing member, and Fig. 8 is a flowchart illustrating a method for producing the third reference impact-absorbing member.

In Fig. 7, the same members as described above are denoted by the same reference signs.

The third reference impact-absorbing member 30 has an external appearance like, for example, a hollow rectangular column (square column in this case), as shown in Fig. 2, and is formed of, for example, a fiber-reinforced resin composite prepared by laminating a required number of (in this case, seven) sheet-shaped prepregs formed by impregnating reinforcing fiber (reinforcing fiber formed of, for example, carbon fiber, glass fiber, aramid fiber (e.g., Kevlar (registered trademark)), ceramic fiber, aromatic polyamide fiber, alumina fiber, silicon carbide fiber, or boron fiber) in advance with a resin (such as epoxy resin, polyester resin, cyanate ester resin, or polyimide resin), followed by molding them under pressure in a heating furnace (autoclave) (not shown).

The impact-absorbing member 30 includes a leading portion (also referred to as "initiator portion" or "release portion") 30a constituting an end (one end (top end) and/or the other end (bottom end)) in the axial direction and an impact-absorbing-member main body (hereinafter referred to as "main body") 30b constituting the other portion.

As shown in Fig. 7, the leading portion 30a is provided in the circumferential direction over a length L4 (for example, 5 to 10 mm) from a leading (terminal) end of the impact-absorbing member 30 toward the main body 30b (toward the center of the main body 30b).

The fiber-reinforced resin composite constituting the impact-absorbing member 30 (that is, the leading portion 30a and the main body 30b) is prepared by, for example, as shown in Fig. 7, sequentially laminating a +45° fiber-reinforced resin layer 11 whose reinforcing fibers are oriented at an inclination of +45° with respect to the axial direction (vertical direction in Fig. 7), a 0° fiber-reinforced resin layer 12 whose reinforcing fibers are oriented in the axial direction (that is, oriented without inclination with respect to the axial direction), a -45° fiber-reinforced resin layer 13 whose reinforcing fibers are oriented at an inclination of -45° with respect to the axial direction, a 0° fiber-reinforced resin layer 12, a -45° fiber-reinforced resin layer 13, a 0° fiber-reinforced resin layer 12, and a +45° fiber-reinforced resin layer 11.

In addition, the leading portion 30a is subjected to treatment (release treatment) as shown in Fig. 8 for each sequential lamination of the +45° fiber-reinforced resin layers 11, the 0° fiber-reinforced resin layers 12, and the -45° fiber-reinforced resin layers 13.

Specifically, (1) a release agent (for example, "FREKOTE 44NC" (trade name) manufactured by Henkel Corporation) is applied onto a peel ply (for example, a polyester cloth), and (2) the release agent applied onto the peel ply is completely volatilized. (3) The peel ply on which the release agent has been completely volatilized is laminated (overlaid) on the leading portion 30a of the fiber-reinforced resin layer (for example, the +45° fiber-reinforced resin layer 11) disposed on the inner circumferential side of the impact-absorbing member 30, and (4) debulking (procedure for removing air to attain adhesion between the fiber-reinforced resin layer and the peel ply) is performed to transfer the release component onto the fiber-reinforced resin layer. (5) After the peel ply is removed, the next fiber-reinforced resin layer (for example, the 0° fiber-reinforced resin layer 12) is laminated on the fiber-reinforced resin layer. Thereafter, this procedure is repeated a specific number of times (six times in this embodiment).

When a load is applied to the impact-absorbing member 30 in the axial direction, the leading portion 30a, which has a lower strength in the axial direction than the main body 30b, fractures earlier in the initial stage of self-fracture, and the main body 30b then fractures in the middle and terminal stages of self-fracture. That is, as shown in Fig. 4, it is possible to control the peak value of the initial load occurring in the impact-absorbing member 30 during transition to a stable sequential fracture mode. In other words, it is possible to eliminate a harmful peak value of the initial load occurring in the initial stage of self-fracture and to maintain the impact load in the middle and terminal stages of self-fracture for a predetermined period of time so that the fracture proceeds at a predetermined load (for example, near the average load).

In addition, the peak value of the initial load on the impact-absorbing member 30 and the value of the predetermined load at which a self-fracture proceeds can be freely set to desired values by changing the composition of the fiber-reinforced resin composite constituting the impact-absorbing member 30 (that is, the materials of the reinforcing fibers and the resin), by providing the leading portion 30a at one or the other end, or both ends, of the impact-absorbing member 30, or by adjusting the length L4 of the leading portion 30a.

For example, a (crushing) fracture test carried out by applying a load to the impact-absorbing member 30 in the axial direction under dynamic conditions yielded test results showing that an impact-absorbing member 30 formed of a certain fiber-reinforced resin composite had a load homogeneity ratio (the initial peak load (kN) divided by the average load (kN)) of 1.04 to 1.28.

In addition, the floor structure 2 of the helicopter 1 covered by the present invention includes the above impact-absorbing member 3, which can eliminate a harmful peak value of the initial load occurring in the initial stage of self-fracture and which can maintain the impact load in the middle and terminal stages of self-fracture for a predetermined period of time so that the fracture proceeds at a predetermined load (for example, near the average load).

Accordingly, even if an unforeseen ground impact is encountered in the event of, for example, a crash, the unforeseen ground impact due to, for example, a crash is absorbed by the impact-absorbing member, which has superior impact-energy absorbing capability, so that it can ensure a good chance of the occupants surviving.

In addition, the helicopter 1 covered by the present invention includes the floor structure 2 of the helicopter 1, which can eliminate a harmful peak value of the initial load occurring in the initial stage of self-fracture and which can maintain the impact load in the middle and terminal stages of self-fracture for a predetermined period of time so that the fracture proceeds at a predetermined load (for example, near the average load).

Accordingly, even if an unforeseen ground impact is encountered in the event of, for example, a crash, the unforeseen ground impact due to, for example, a crash is absorbed by the floor structure 2 of the helicopter 1, which has superior impact-energy absorbing capability, so that it can ensure a good chance of the occupants surviving.

The applications of the impact-absorbing member of the present invention are not limited to the floor structure 2 of the helicopter 1; other applications include crashworthy structural members, such as floor structures of fixed-wing aircraft and bumpers of automobiles.

In addition, the applications of a crashworthy structural member of the present invention are not limited to the helicopter 1; other applications include traveling objects such as fixed-wing aircraft and automobiles.

In addition, the shape of the external appearance of the impact-absorbing member of the present invention is not limited to a hollow rectangular columnar shape, as shown in Fig. 2; it may be, for example, a tube shape such as a cylindrical tube with a conical or spherical top, a rectangular tube, a conical tube, a pyramid tube, a frusto-conical tube, a frusto-pyramid tube, a tube with an elliptical transverse cross-section, or a flanged cylindrical tube (or rectangular tube). In addition, as examples of shapes other than tube shapes, columnar shapes such as cylindrical and rectangular columns may be used. In addition, although the impact-absorbing member may be formed of a single member, it is not limited thereto; it may be configured by stacking or combining a plurality of members. In addition, the sides (outer circumferential surfaces) may have a curved portion.

In addition, although the first to third reference impact-absorbing members 10, 20, and 30 including the +45° fiber-reinforced resin layer 11, the 0° fiber-reinforced resin layer 13, the -45° fiber-reinforced resin layer 12, the 0° fiber-reinforced resin layer 13, the -45° fiber-reinforced resin layer 12, the 0° fiber-reinforced resin layer 13, and the +45° fiber-reinforced resin layer 11 have been described as specific examples, the 0° fiber-reinforced resin layers 13 can be replaced as needed with, for example, 0°±45° fiber-reinforced resin layers whose reinforcing fibers (not shown) are oriented at an inclination of +45° or -45° with respect to the axial direction, 0°±15° fiber-reinforced resin layers, 0°±5° fiber-reinforced resin layers, or 0°±1° fiber-reinforced resin layers.

In addition, the fiber-reinforced resin layers that can replace the 0° fiber-reinforced resin layers 13 are not limited to 0°±45° fiber-reinforced resin layers, 0°±15° fiber-reinforced resin layers, 0°±5° fiber-reinforced resin layers, or 0°±1° fiber-reinforced resin layers; any fiber-reinforced resin layers falling within the range of 0°±45° may be used.

This allows finer setting of the peak value of the initial load and the value of the predetermined load at which a self-fracture proceeds, thus further extending the design flexibility of the impact-absorbing member 10, 20, 30.

In addition, the resin material constituting the impact-absorbing members is not particularly limited and can be exemplified by thermosetting resins such as epoxy resin, unsaturated polyester resin, phenolic resin, epoxy acrylate (vinyl ester) resin, bismaleimide resin, polyimide resin, guanamine resin, furan resin, polyurethane resin, polydiallyl phthalate resin, and amino resin.

The resin material can also be exemplified by polyamides such as nylon 6, nylon 66, nylon 11, nylon 610, and nylon 612 or copolyamides of these polyamides; polyesters such as polyethylene terephthalate and polybutylene terephthalate or copolyesters of these polyesters; polycarbonates; polyamideimides; polyphenylene sulfides; polyphenylene oxides; polysulfones; polyethersulfones; polyetheretherketones; polyetherimides; polyolefins; and thermoplastic elastomers typified by polyester elastomers and polyamide elastomers.

In addition, as examples of resins satisfying the above range, rubbers such as acrylic rubber, acrylonitrile-butadiene rubber, urethane rubber, silicone rubber, styrene-butadiene rubber, and fluororubber can be used, and mixed resins prepared by mixing a plurality of materials selected from the above thermosetting resins, thermoplastic resins, and rubbers may also be used.

In addition, the present invention is not limited to the first embodiment; for example, the impact-absorbing member of the first embodiment can be implemented in combination with the first reference impact-absorbing member or the second reference impact-absorbing member.

## Claims

1. An impact-absorbing member (3) comprising:
a main body (3b) including a plurality of fiber-reinforced resin layers (4, 6, 7) that absorb an impact through self-fracture when subjected to the impact; and
a leading portion (3a) including a plurality of fiber-reinforced resin layers (4, 5, 6) that absorb the impact through self-fracture when subjected to the impact, the leading portion (3a) fracturing initially when subjected to the impact, wherein
at least one of the fiber-reinforced resin layers (4, 5, 6) of the leading portion (3a) has reinforcing fibers oriented at an angular difference of 10° or more with respect to an energy-absorption axis direction,
the main body (3b) has a higher strength and elastic modulus in the energy-absorption axis direction than the leading portion (3a), and
at least one of the fiber-reinforced resin layers (4, 6, 7) of the main body (3b) and at least one of the fiber-reinforced resin layers (4, 5, 6) of the leading portion (3a) is the same fiber-reinforced resin layer,
**characterized in that** the fiber-reinforced resin layers (7) of the main body (3b) and the fiber-reinforced resin layers (5) of the leading portion (3a) which are included in the same fiber-reinforced resin layer, have the reinforcing fibers in the fiber-reinforced resin layers (7) of the main body (3b) oriented at an angle within a range of 0°±45° with respect to the energy-absorption axis direction, and have the reinforcing fibers in the fiber-reinforced resin layers (5) of the leading portion (3a) oriented at an angle within a range of 90°±45° with respect to the energy-absorption axis direction.

2. An impact-absorbing member (3) according to claim 1, wherein the leading portion (3a) is formed by gradually applying a load crushing the portion in a direction of an energy-absorption axis and stopping the crushing by the load when displacement of the fiber-reinforced resin layers (4, 5, 6) reaches a desired value.

3. An impact-absorbing member (3) according to claim 1, wherein the reinforcing fibers of the leading portion (3a) (i) meander locally so as to protrude inward or outward with respect to a circumferential direction, or (ii) meander locally inward with respect to the circumferential direction.

4. A crashworthy structural member comprising the impact-absorbing member (3) according to one of claims 1 to 3.

5. A traveling object comprising the crashworthy structural member according to claim 4.

## Patentansprüche

1. Stoßabsorbierendes Element (3), umfassend:
einen Hauptkörper (3b), welcher eine Vielzahl von faserverstärkten Harzschichten (4, 6, 7) umfasst, die, wenn sie einem Stoß ausgesetzt werden, den Stoß durch Selbstbruch absorbieren; und
einen Kopfbereich (3a), welcher eine Vielzahl von faserverstärkten Harzschichten (4, 5, 6) umfasst, die, wenn sie dem Stoß ausgesetzt werden, den Stoß durch Selbstbruch absorbieren, wobei der Kopfbereich (3a), wenn er dem Stoß ausgesetzt wird, als erstes bricht, wobei
zumindest eine der faserverstärkten Harzschichten (4, 5, 6) des Kopfbereichs (3a) Verstärkungsfasern aufweist, welche derart orientiert sind, dass sie eine Winkeldifferenz von 10° oder mehr in Bezug auf eine Energieabsorptionsachsenrichtung aufweisen,
der Hauptkörper (3b) eine höhere Festigkeit und einen höheren Elastizitätsmodul in Energieabsorptionsachsenrichtung aufweist als der Kopfbereich (3a), und
es sich bei zumindest einer der faserverstärkten Harzschichten (4, 6, 7) des Hauptkörpers (3b) und zumindest einer der faserverstärkten Harzschichten (4, 5, 6) des Kopfbereichs (3a) um dieselbe faserverstärkte Harzschicht handelt,
**dadurch gekennzeichnet, dass** in den faserverstärkten Harzschichten (7) des Hauptkörpers (3b) und den faserverstärkten Harzschichten (5) des Kopfbereichs (3a), welche in derselben faserverstärkten Harzschicht enthalten sind, die Verstärkungsfasern in den faserverstärkten Harzschichten (7) des Hauptkörpers (3b) derart orientiert sind, dass sie einen Winkel in einem Bereich von 0°±45° in Bezug auf die Energieabsorptionsachsenrichtung aufweisen, und die Verstärkungsfasern in den faserverstärkten Harzschichten (5) des Kopfbereichs (3a) derart orientiert sind, dass sie einen Winkel in einem Bereich von 90°±45° in Bezug auf die Energieabsorptionsachsenrichtung aufweisen.

2. Stoßabsorbierendes Element (3) gemäß Anspruch 1, wobei der Kopfbereich (3a) durch stufenweises Ausüben einer den Bereich stauchenden Kraft in einer Energieabsorptionsachsenrichtung und Beenden der durch die Kraft vermittelten Stauchung, wenn die Verschiebung der faserverstärkten Harzschichten (4, 5, 6) einen gewünschten Wert erreicht, gebildet wird.

3. Stoßabsorbierendes Element (3) gemäß Anspruch 1, wobei die Verstärkungsfasern des Kopfbereichs (3a) (i) sich lokal schlängeln, so dass sie in Bezug auf eine Umfangsrichtung nach innen oder nach außen hervorstehen, oder (ii) sich in Bezug auf die Umfangsrichtung lokal nach innen schlängeln.

4. Aufprallfestes Strukturelement, umfassend das stoßabsorbierende Element (3) gemäß einem der Ansprüche 1 bis 3.

5. Transportobjekt, umfassend das aufprallfeste Strukturelement gemäß Anspruch 4.

## Revendications

1. Organe d'absorption de choc (3) comprenant :
un corps principal (3b) comportant une pluralité de couches de résine renforcées de fibres (4, 6, 7) qui absorbent un choc par auto-rupture lorsqu'elles sont soumises au choc ; et
une portion d'attaque (3a) comportant une pluralité de couches de résine renforcées de fibres (4, 5, 6) qui absorbent le choc par auto-rupture lorsqu'elles sont soumises au choc, la portion d'attaque (3a) se rompant initialement lorsqu'elle est soumise au choc, dans lequel
au moins l'une des couches de résine renforcées de fibres (4, 5, 6) de la portion d'attaque (3a) comporte des fibres de renforcement orientées à une différence angulaire de 10° ou plus par rapport à une direction d'axe d'absorption d'énergie,
le corps principal (3b) présente une résistance mécanique et un module d'élasticité plus élevés dans la direction d'axe d'absorption d'énergie que la portion d'attaque (3a), et
au moins l'une des couches de résine renforcées de fibres (4, 6, 7) du corps principal (3b) et au moins l'une des couches de résine renforcées de fibres (4, 5, 6) de la portion d'attaque (3a) est la même couche de résine renforcée de fibres,
**caractérisé en ce que** les couches de résine renforcées de fibres (7) du corps principal (3b) et les couches de résine renforcées de fibres (5) de la portion d'attaque (3a) qui sont comprises dans la même couche de résine renforcée de fibres, comportent les fibres de renforcement dans les couches de résine renforcées de fibres (7) du corps principal (3b) orientées à un angle dans une plage de 0°±45° par rapport à la direction d'axe d'absorption d'énergie, et comportent les fibres de renforcement dans les couches de résine renforcées de fibres (5) de la portion d'attaque (3a) orientées à un angle dans une plage de 90° ± 45° par rapport à la direction d'axe d'absorption d'énergie.

2. Organe d'absorption de choc (3) selon la revendication 1, dans lequel la portion d'attaque (3a) est formée en appliquant progressivement une charge écrasant la portion dans une direction d'un axe d'absorption d'énergie et en arrêtant l'écrasement par la charge lorsqu'un déplacement des couches de résine renforcées de fibres (4, 5, 6) atteint une valeur souhaitée.

3. Organe d'absorption de choc (3) selon la revendication 1, dans lequel les fibres de renforcement de la portion d'attaque (3a) (i) serpentent localement de façon à faire saillie vers l'intérieur ou vers l'extérieur par rapport à une direction circonférentielle, ou (ii) serpentent localement vers l'intérieur par rapport à la direction circonférentielle.

4. Organe structurel résistant aux impacts comprenant l'organe d'absorption de choc (3) selon l'une des revendications 1 à 3.

5. Objet circulant comprenant l'organe structurel résistant aux impacts selon la revendication 4.
